# EUROPÄISCHE PATENTANMELDUNG

(11) **EP 0 959 443 A2**
(43) Veröffentlichungstag der Anmeldung: **24.11.1999**
(21) Anmeldenummer: 99109660.3
(22) Anmeldetag: 15.05.1999
(51) Int. Cl.: G08G 1/0968

(54) **Verfahren zum Betrieb eines Navigationssystems für Kraftfahrzeuge**

(30) Priorität: 23.05.1998 DE 19823123
(71) Anmelder: ADAM OPEL AG, 65423 Rüsselsheim (DE)
(72) Erfinder: Leibold, Frank, Dipl.-Ing., 64569 Nauheim (DE)
(74) Vertreter: Kümpfel, Heinz, Dipl.-Ing.

(57) **Zusammenfassung**

Die Erfindung bezieht sich auf ein Verfahren zum Betrieb eines Navigationssystems für Kraftfahrzeuge, bei dem Navigationsdaten von einem zentralen Navigationsrechner über ein Mobilfunk-Gerät abgefragt werden und bei dem ein Reisestart-Ruf bzw. ein Weck-Ruf von dem Navigationsrechner aus an den Nutzer des Navigationssystems übermittelt wird, so daß dieser seine Reise verkehrssituationsabhängig zum richtigen Zeitpunkt beginnen kann.

## Beschreibung

Die Erfindung bezieht sich auf ein Verfahren zum Betrieb eines Navigationssystems für Kraftfahrzeuge mit den im Oberbegriff des Patentanspruchs 1 angegebenen Merkmalen.

Es sind zwei grundsätzlich verschiedene Navigationssysteme für Kraftfahrzeuge bekannt, wobei einerseits alle notwendige Karten-Daten an Bord des Kraftfahrzeugs verfügbar sind und andererseits ein zentraler Navigationsrechner zur Abfrage der Navigationsdaten genutzt wird. Die erstgenannte Lösung hat den Nachteil, daß die jeweils vorhandenen Daten schnell veralten und damit nicht immer den aktuellen Bedingungen Rechnung tragen. Diese Navigationsverfahren sind von der vorliegenden Erfindung nicht betroffen.

Beim hier in Rede stehenden Verfahren gibt der Fahrzeugnutzer über eine Eingabevorrichtung (MobilfunkGerät oder Terminal) einen Startort und ein Fahrtziel ein. Als Startort kann auch die aktuell von einem GPS-System ermittelte Fahrzeugposition automatisch übernommen werden. Diese Daten werden per Mobilfunk-Gerät an einen zentralen Navigationsrechner übermittelt. Dies erfolgt durch einen Telefonanruf an einen Operator, verbal oder durch Eingabe an ein Terminal direkt in den Navigationsrechner. Der Navigationsrechner ermittelt eine Fahrtroute, wobei gewährleistet ist, daß dies unter Nutzung sehr aktueller Karten-Daten und unter Einbeziehung aktueller Verkehrsinformationen (Staus, Straßensperrungen, Baustellen, usw.) erfolgt. Die ermittelte Fahrtroute wird an das Mobilfunk-Gerät übermittelt und mittels geeigneter Mittel zur Fahrtroutenausgabe dargestellt. Ein derartiges Verfahren wird beispielsweise in der Vorrichtung gemäß DE 44 29 121 C1 genutzt.

Es ist Aufgabe der Erfindung, das Verfahren zum Betrieb eines Navigationssystems derart weiter zu entwickeln, daß sich der Kundennutzen ohne wesentlichen Mehraufwand erhöht.

Zur Lösung dieser Aufgabe zeichnet sich das erfindungsgemäße Verfahren durch die im Patentanspruch 1 angegebenen Merkmale aus. Einzelheiten der Erfindung ergeben sich aus den Patentansprüchen 2 bis 5.

Es wird nicht nur der Startort und das Fahrtziel, sondern zusätzlich auch die gewünschte Ankunftszeit eingegeben und an den Navigationsrechner übertragen. Der Navigationsrechner kann mit diesen Eingangsdaten die voraussichtliche Reisezeit unter Einbeziehung der aktuellen bzw. prognostizierten Verkehrssituation und der voraussichtlichen Wetterlage berechnen, woraus sich eine notwendige Abfahrtszeit ergibt. Abhängig von dieser Abfahrtszeit überträgt der Navigationsrechner einen StartRuf bzw. einen Weck-Ruf an das Mobilfunk-Gerät oder an ein speziell für diesen Ruf angegebene TelefonteilnehmerNummer (beispielsweise Privat-Telefonnummer des Fahrzeugnutzers). Von Vorteil ist, wenn der Reisestart-Ruf bzw. der Weck-Ruf eine festlegbare Zeitspanne vor der berechneten notwendigen Abfahrtszeit erfolgt. Die Auswahl dieser Zeitspanne kann ebenfalls bei der Eingabe von Fahrtziel und Ankunftszeit vorgenommen werden. So hat das Navigationssystem, welches nach dem erfindungsgemäßen Verfahren betrieben wird, eine zusätzliche Funktionalität, ohne daß damit zusätzlicher Aufwand beim Systemnutzer entsteht. Der Nutzer kann sicher sein, daß er bei Berücksichtigung aller vorhersehbarer Umstände seine Reise pünktlich antritt, wobei ihm die übermittelten Navigationsdaten (Fahrtroute) wie üblich zur Verfügung stehen.

Wird als Fahrtziel eine bestimmte Verbindung eines öffentlichen Verkehrsmittels angegeben, ist das Verfahren ebenfalls von Vorteil, wenn aktuelle Störungen beim Betrieb dieser Verkehrsmittel einbezogen werden, worüber dem Navigationsrechner Informationen vorliegen müssen. Wird beispielsweise eine bestimmte Flugverbindung an einem bestimmten Flughafen als Fahrtziel angegeben, wird vom Navigationsrechner einerseits überprüft, ob der Flug pünktlich starten wird. Wenn nicht, wird die korrigierte Abflugzeit abzüglich einer Reisemittel-Wechselzeit als Ankunftszeit eingeplant und von dort aus auf die Reise-Startzeit zurückgerechnet. Der Start-Ruf bzw. WeckRuf erfolgt dann entsprechend und unnötige Wartezeiten am Flughafen sind vermeidbar.

Mit den individuellen Möglichkeiten ist die Reiseplanung aufgrund bestehender Unsicherheiten oft fehlerbehaftet. Mit dem erfindungsgemäßen Verfahren wird ein Teil der Reiseplanung von dem zentralen Navigationsrechner übernommen, wobei dieser auf deutlich breitere und aktuellere Informationsquellen zurückgreifen kann, als dies individuell möglich ist. Die herkömmliche Navigationsvorrichtung ist ohne zusätzlichen gerätetechnischen Aufwand für dieses Verfahren nutzbar.

## Patentansprüche

1. Verfahren zum Betrieb eines Navigationssystems für Kraftfahrzeuge, bei dem ein Standort und ein Fahrtziel über eine Eingabevorrichtung eingegeben und per Mobilfunk-Gerät an einen zentralen Navigationsrechner übermittelt wird und eine Fahrtroute unter Einbeziehung von Wegnetzdaten und verkehrsbedingten Zusatzinformationen vom Navigationsrechner an das Mobilfunk-Gerät übermittelt wird, **dadurch gekennzeichnet,** daß über die Eingabevorrichtung auch die gewünschte Ankunftszeit am Fahrtziel eingebbar ist und diese Ankunftszeit an den Navigationsrechner über-mittelt wird, wobei von diesem verkehrssituationsabhängig ein Reisestart-Ruf bzw. ein Weck-Ruf an das Mobilfunk-Gerät oder an eine speziell dafür angegebene Telefonteilnehmer-Nummer ausgegeben wird.

2. Verfahren nach Anspruch 1, **dadurch gekennzeichnet,** daß der Reisestart-Ruf bzw. der Weck-Ruf eine festlegbare Zeitspanne vor der verkehrssituationsabhängig notwendigen Abfahrtszeit erfolgt.

3. Verfahren nach Anspruch 1 oder 2, **dadurch gekennzeichnet,** daß als Fahrtziel auch Anschlußverbindungen von öffentlichen Verkehrsmitteln eingebbar sind, wobei aktuelle Störungen im Betrieb dieser öffentlichen Verkehrsmittel bei der Ermittlung der Reisestart-Ruf- bzw. Weck-Ruf-Zeit einbezogen werden.

4. Verfahren nach einem der Ansprüche 1 bis 3, **dadurch gekennzeichnet,** daß der Navigationsrechner bei der Berechnung der voraussichtlich benötigten Reisezeit aktuelle und prognostizierte Verkehrsinformationen und die zur Reisezeit aktuell zu erwartende Wettersituation einbezieht.

5. Verfahren nach einem der Ansprüche 1 bis 4, **dadurch gekennzeichnet,** daß die Eingabevorrichtung das Mobilfunk-Gerät ist und über dieses die Eingangsinformationen für den Navigationsrechner verbal übertragen werden, oder daß die Eingabevorrichtung ein Terminal ist, von dem aus die Eingangsinformationen direkt als Daten in den Navigationsrechner übertragen werden.
